# EUROPEAN PATENT APPLICATION

(11) **EP 1 575 178 A2**
(43) Date of publication of application: **14.09.2005**
(21) Application number: 05005032.7
(22) Date of filing: 08.03.2005
(51) Int. Cl.: H04B 1/16

(54) **Mobile data terminal and communication method therefor**

(30) Priority: 12.03.2004 JP 2004071299
(71) Applicant: NEC CORPORATION, Tokyo (JP)
(72) Inventor: Asada, Hideaki, Tokyo (JP)
(74) Representative: Vossius & Partner

(57) **Abstract**

A mobile data terminal and a communication method therefor enabling CPU power consumption to be reduced by changing a setting of a CPU operation clock signal to a lower frequency than in a busy state and by maintaining a frequency of a memory access clock signal at the same level as in the busy state. If the mobile data terminal is put in a wait state within or outside a service area, the present invention uses a CPU clock control means to control a CPU operation clock signal, which has been set in the busy state of the mobile data terminal, to be set to a lower-speed CPU operation clock signal and uses a memory access clock control means to control a memory access clock signal supplied to a memory controller, which is provided in the mobile data terminal and for use in regulating an external memory access speed and a CPU operation speed, to be maintained at the same level as for a memory access clock signal set in the busy state of the mobile data terminal, simultaneously with the setting change of the CPU operation clock signal.

## Description

The present invention relates to a power-saving mobile data terminal and a communication method therefor.

A portable terminal such as a mobile phone is limited in its battery capacity. Therefore, there is much demand for power saving in this technical field.

The following documents disclose technologies for reducing power consumption of mobile phones:
JP-A-2000-036770 describes an existing technology that reduces power consumption by stopping a fast clock (a master clock) supply for operating an apparatus and supplying a slow clock as another clock instead in a sleep state.
JP-A-2000-244351 describes a use of a master clock means for generating the first clock signal of high accuracy and a slave clock means for generating the second clock signal of lower accuracy than the first clock signal generated by the master clock means with lower power consumption than the master clock means in different situations.
JP-A-2002-202830 describes a microcomputer comprising a main clock generation means for operating a CPU and an intermittent operation control means for controlling the CPU to operate intermittently in addition to operating upon receiving a sub-clock of lower frequency than the main clock.
JP-A-2002-368676 describes a use of a first-frequency clock for a normal operation and a second-frequency clock for a control in a sleep state.
JP-A-2003-110484 discloses that a clock switching means is used to supply a high-speed clock signal as the first clock signal to the second clock signal supply means if a data processing control means is in an awake state and to supply a low-speed clock signal as the first clock signal to the second clock signal supply means if the data processing control means is in a state of transition to an awake state or a sleep state.

In the above conventional technologies of switching the operation clocks, however, there have been limits in reducing the power consumption of mobile phones. In other words, the power consumption during operation with the lower operation clock is the minimum power consumption in these technologies.

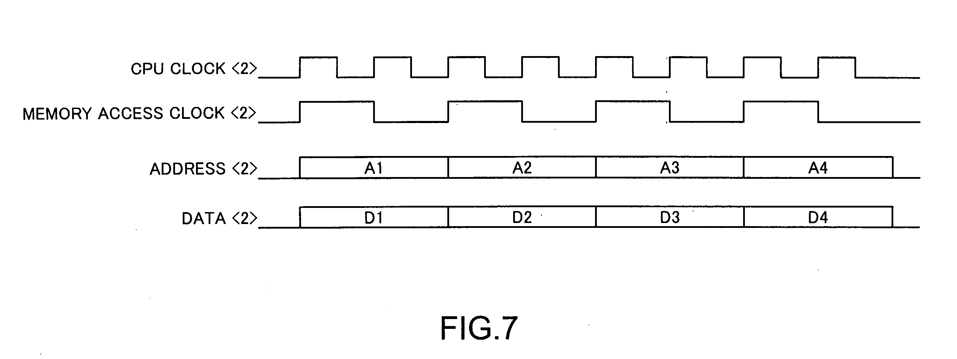

The conventional technologies, however, have problems described below. Referring to FIG. 7, there is shown a timing chart on a CPU operation clock signal, a memory access clock signal, an address, and data in a conventional mobile data terminal. As shown in FIG. 7, if the CPU operation clock signal is changed to a low-speed (low-frequency) CPU clock <2>, the memory access clock frequency also becomes low relative to the CPU clock <2> similarly to the CPU operation clock signal.

It is noted that <2> signifies the low frequency state. High-frequency state <1> is not shown in FIG. 7.

In view of the above and other exemplary problems, it is exemplary feature of the present invention to provide a mobile data terminal and a communication method therefor that can reduce power consumption of a CPU while maintaining an access speed to a ROM/RAM.

Concretely, this exemplary feature is made possible by setting a frequency of a clock signal supplied to the CPU lower than a frequency in a busy state if processing of the mobile phone is less than in the busy state such as, for example, in a wait state, while a memory access clock control means maintains a frequency of an access clock signal supplied to the ROM/RAM at the same frequency as in the busy state.

To achieve the exemplary feature, a CPU clock control means changes the CPU operation clock signal, which has been set in the busy state of the mobile data terminal, to a low-speed CPU operation clock signal if the mobile data terminal is put in a wait state.

Simultaneously, a memory access clock control means controls a memory access clock signal supplied to a memory controller for regulating a ROM/RAM access speed and a CPU operation speed so as to be maintained at the same level set in the busy state of the mobile data terminal.

The invention will be further described with reference to the drawings:
FIG. 1 is a block diagram showing a configuration of relevant parts in a mobile data terminal according to an exemplary embodiment of the present invention.
FIG. 2 is a timing chart on a CPU operation clock signal, a memory access clock signal, an address, and data in a condition where the mobile data terminal of the exemplary embodiment of the present invention is busy.
FIG. 3 is a timing chart on a CPU clock signal, a memory access clock signal, an address, and data in a condition where the mobile data terminal of the exemplary embodiment of the present invention is not busy.
FIG. 4 is a flowchart of an operation performed when the mobile data terminal of the exemplary embodiment of the present invention is waiting within a service area.
FIG. 5 is a flowchart of an operation performed when the mobile data terminal of the exemplary embodiment of the present invention is waiting outside the service area.
FIG. 6(A) is a diagram showing a consumed current flowing in a CPU when the CPU executes predetermined processing in the busy state of the mobile data terminal of the exemplary embodiment of the present invention.
FIG. 6(B) is a diagram showing a consumed current flowing in the CPU when the CPU executes predetermined processing with a setting of a low-speed CPU operation clock signal in a conventional mobile data terminal.
FIG. 6(C) is a diagram showing a consumed current flowing in the CPU when the CPU executes predetermined processing with a setting of a low-speed CPU operation clock signal in the mobile data terminal of the exemplary embodiment of the present invention.
FIG. 7 is a timing chart on a CPU operation clock signal, a memory access clock signal, an address, and data in the conventional mobile data terminal.

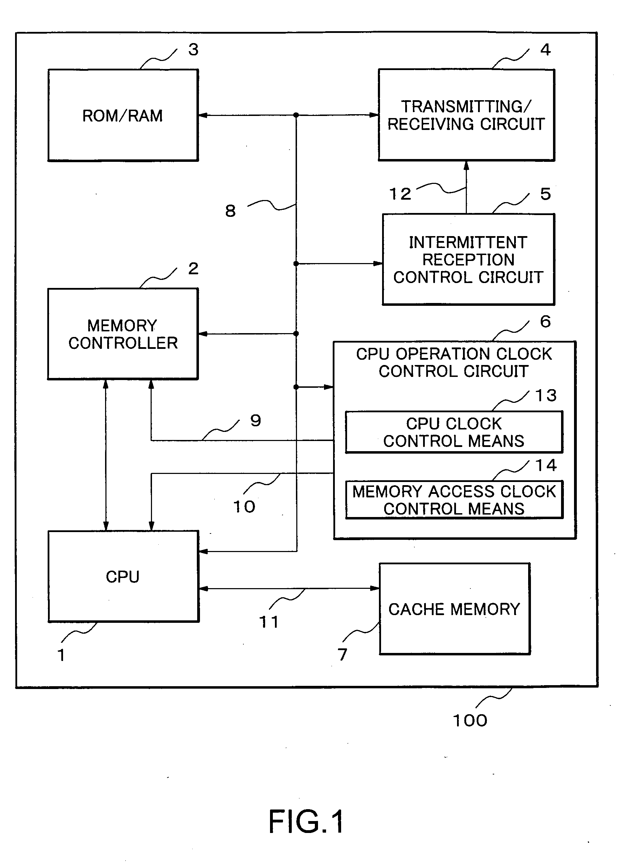

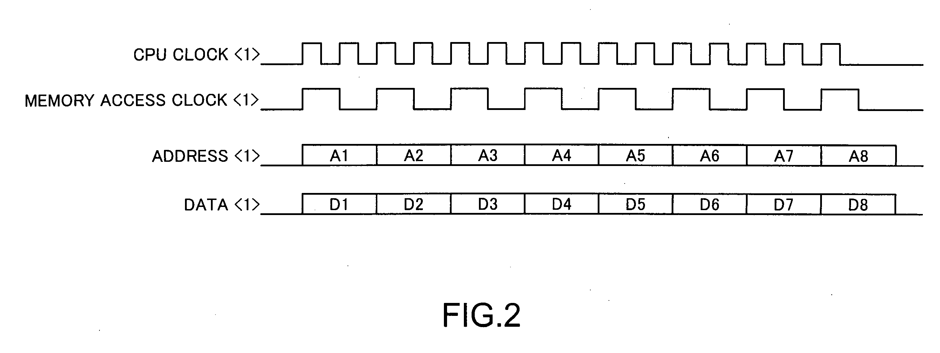

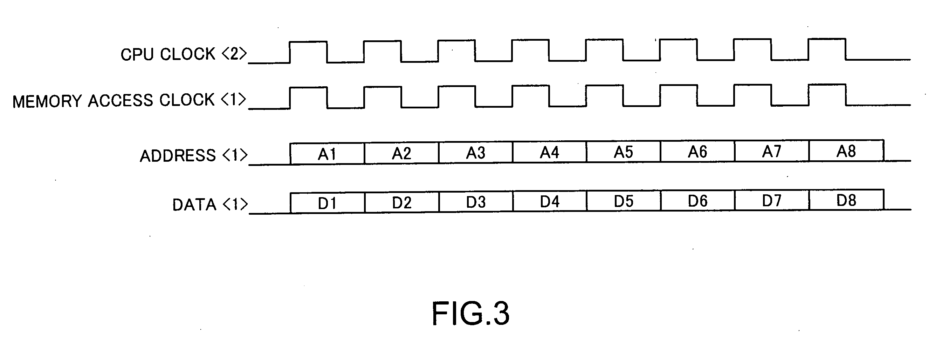

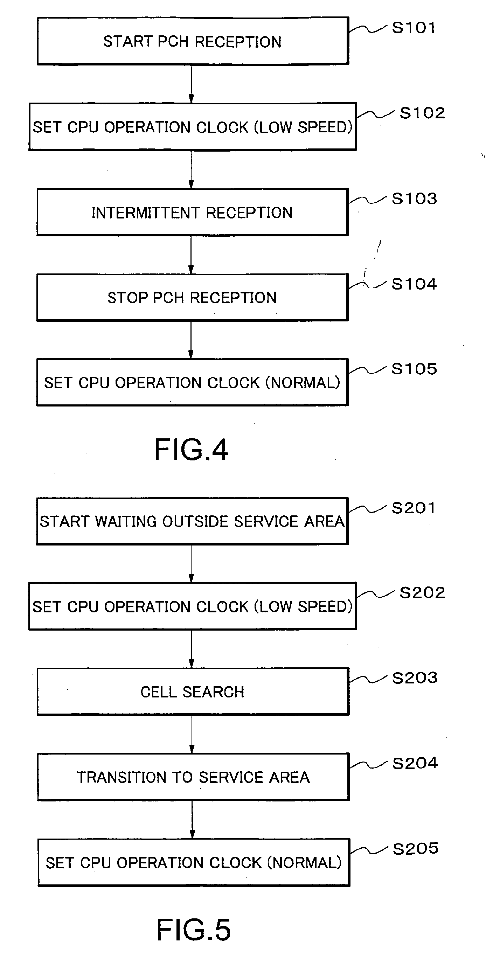

FIG. 1 shows a block diagram of a mobile data terminal according to an exemplary embodiment of the present invention. FIG. 2 shows a timing chart on a normal CPU operation clock signal, a memory access clock signal, an address, and data supplied to a CPU in a condition
where the mobile data terminal 100 according to this embodiment is busy. FIG. 3 shows a timing chart on a CPU clock signal, a memory access clock signal, an address, and data in a condition where the mobile data terminal 100 according to this embodiment is in a wait state. FIG. 4 shows a flowchart of an operation performed when the mobile data terminal 100 of this embodiment is in a wait state within a service area.

The mobile data terminal 100 of this embodiment comprises a CPU 1, a memory controller 2, a ROM/RAM 3, a transmitting/receiving circuit 4, an intermittent reception control circuit 5, a CPU operation clock control circuit 6, a cache memory 7, a bus 8, a control line 9, a control line 10, a dedicated bus 11, a control line 12, a CPU clock control means 13, and a memory access clock control means 14.

The CPU 1 is connected to various parts in the mobile data terminal 100 via the memory controller 2 and the bus 8. The CPU 1 controls these parts of the mobile data terminal.

The memory controller 2 regulates an access speed in the CPU 1 and an access speed in the ROM/RAM 3. The regulation is carried out for the CPU 1 to read out a program and data (address <1> and data <1> in FIG. 2) recorded in the ROM/RAM 3 via the bus 8. It is noted that <1> denotes the normal (high frequency) state.

The ROM/RAM (external memory) 3 is used as a storage location or a working memory for programs necessary for the mobile data terminal 100.

The transmitting/receiving circuit 4 is for use in performing wireless data transmission or reception.

The intermittent reception control circuit 5 is for use in operating the receiving circuit intermittently only for confirming an incoming call or the like. The intermittent reception control circuit 5 controls a transmitting/receiving operation of the transmitting/receiving circuit 4 via the control line 12.

The CPU 1 controls the CPU operation clock control circuit 6 via the memory controller 2 and the bus 8. The CPU operation clock control circuit 6 includes a CPU clock control means 13 and a memory access clock control means 14 to control clock signals supplied to the CPU 1 and the memory controller 2. The CPU operation clock control circuit 6 supplies a memory access clock signal to the memory controller 2 via the control line 9 and a CPU operation clock signal to the CPU 1 via the control line 10.

The cache memory 7 is for use in caching the programs and data for the mobile data terminal 100 stored in the ROM/RAM 3. The cache memory 7 is capable of a fast access for connection with the CPU 1 via the dedicated bus 11.

By using the dedicated bus 11, the CPU 1 reads and references the programs and data cached by the cache memory 7 at a higher speed (the same speed as a CPU clock supplied to the CPU 1) than reading the programs and data stored in the ROM/RAM 3.

With reference to FIG 2, the following describes an operation performed when the mobile data terminal 100 of this embodiment is busy.

Referring to FIG. 2, there is shown a timing chart on a CPU clock <1>, a memory access clock <1>, an address <1>, and data <1>.

In FIG. 2, the CPU clock <1> is a CPU operation clock signal that the CPU operation clock control circuit 6 shown in FIG. 1 supplies to the CPU 1 if the mobile data terminal 100 is busy.

The memory access clock <1> is a clock signal that the CPU operation clock control circuit 6 supplies to the memory controller 2 via the control line 9. A frequency of the memory access clock <1> relates to an access speed at which the CPU 1 reads out the programs and data (address <1> and data <1> in FIG. 2) recorded in the ROM/RAM 3.

Specifically, the memory controller 2 specifies the address <1> of the ROM/RAM 3 or reads and writes the data <1> recorded in the ROM/RAM 3 for each cycle of the memory access clock <1> by using the memory access clock <1> in this embodiment.

In FIG. 2, the frequency of the memory access clock <1> is about a half of the frequency of the CPU clock <1>. This effect is due to a configuration of the CPU operation clock control circuit 6 generating the memory access clock <1> by dividing the CPU clock <1>.

The following describes an operation performed when the mobile data terminal 100 of this embodiment is waiting within a service area.

During the waiting within reach (service area) of a radio wave from a base station (not shown), the base station and the mobile data terminal 100 exchange data via a control channel (PCH: Paging channel). In other words, the mobile data terminal 100 checks whether there is an incoming call to itself for each cycle allocated to the mobile data terminal 100 during the waiting. If there is any incoming call to the mobile data terminal, then the base station inserts data indicative it of an incoming call in the allocated cycle. After confirming the incoming call with reference to the PCH, the mobile data terminal 100 attempts to make a connection by using the dedicated channel.

Referring to FIG. 4, there is shown a flowchart of processing of the mobile data terminal 100 of this embodiment for the above operation in the wait state within the service area.

When the PCH reception is started as shown in FIG. 4 (step 101), the CPU 1 shown in FIG. 1 controls the CPU clock control means 13 of the CPU operation clock control circuit 6 to change the setting of the CPU operation clock signal to a lower speed (lower frequency) than the normal CPU operation clock signal (CPU clock <1> in FIG. 2) set in a busy state (step 102).

Thereafter, during intermittent reception for the PCH reception (step 103), the mobile data terminal 100 operates at a slow clock signal.

If there is any incoming or outgoing call to or from the mobile data terminal 100, then there is no need to await a response any more and therefore the PCH reception is stopped (step 104). In this condition, the CPU 1 controls the CPU clock control means 13 of the CPU operation clock control circuit 6 to set the normal CPU operation clock signal (CPU clock <1>) shown in FIG. 2. Thereafter, the CPU 1 operates based on a cycle of the fasted CPU clock <1> shown in FIG. 2. Thus, CPU 1 operates at a speed about twice higher than the setting of the slowed CPU clock <2>.

Referring to FIG. 3, there is shown a timing chart on a CPU operation clock signal, a memory access clock signal an address, and data. With reference thereto, the following describes an operation of the mobile data terminal 100 when the CPU operation clock signal is set to a low speed.

The CPU clock <2> shown in FIG. 3 is a low-speed (low-frequency) CPU operation clock signal changed in setting in the above step 102. In this embodiment, the frequency of the CPU clock <2>, which is the low-speed (low-frequency) CPU operation clock signal, is generated by dividing the CPU clock <1> shown in FIG. 2.

As shown in FIG. 3, regarding the memory access clock, the memory access clock control means 14 shown in FIG. 1 sets the memory access clock <1> so as to maintain the setting for a busy condition of the mobile data terminal 100 shown in FIG. 2. In other words, in this embodiment, the memory access clock control means 14 multiplies the divided CPU clock <2>. Thereby, the memory access clock can be maintained even after the setting of the CPU clock <2>.

The provision of the foregoing memory access clock control means 14 prevents the memory access clock signal from being changed in setting to a low speed (low frequency) with the setting change to the low-speed (low-frequency) CPU clock <2>.

Since the address and the data recorded in the ROM/RAM 3 are controlled for each cycle of the memory access clock, the address and the data in the ROM/RAM 3 can be controlled at a speed twice higher than the conventional technologies in the address <1> and the data <1> shown in FIG. 3. Therefore, when the CPU 1 executes predetermined processing, the processing time can be reduced in comparison with the conventional technologies according to this embodiment of the present invention.

The following describes an operation performed when the mobile data terminal 100 of this embodiment is waiting outside a service area of a base station not shown (waiting outside the service area). Referring to FIG. 5, there is shown a flowchart of the operation performed when the mobile data terminal 100 of this embodiment is waiting outside the service area.

As shown in FIG. 5, if the mobile data terminal 100 starts to be waiting outside the service area (step 201), the CPU 1 controls the CPU clock control means 13 of the CPU operation clock control circuit 6 to change the setting of the CPU operation clock signal to a lower speed (lower frequency) than the normal CPU operation clock signal (CPU clock <1> in FIG. 2) set in a busy state (step 202). Note here that the terms "waiting outside the service area" suggests that a cell search is performed to find out a base station. When the CPU operation clock signal is changed in setting in step 202, the operation of the mobile data terminal 100 is the same as the operation already described with reference to FIG. 3.

Therefore, the mobile data terminal 100 operates similarly to the contents already described with reference to FIG. 3 during the cell search for finding out the base station (step 203) shown in FIG. 5.

Subsequently, if the mobile data terminal 100 finds out a cell existing in the service area during the cell search, the control progresses to a service area transition step (step 204). In this condition, the CPU 1 controls the CPU clock control means 13 of the CPU operation clock control circuit 6 to change the setting to the CPU clock <1> (the normal CPU operation clock signal set in the busy state). Thereby, the CPU 1 operates based on the cycle of the CPU clock <1> shown in FIG. 2 and thus operates at a speed about twice higher than the setting of the CPU clock <2>.

As stated above, this embodiment includes an application of the first means for changing the setting to the CPU operation clock signal having a lower frequency (CPU clock <2> shown in FIG. 3) than the frequency of the normal CPU operation clock signal (CPU clock <1> shown in FIG. 2). Such a CPU clock <1> is set when the mobile data terminal 100 is busy, by the CPU clock control means 13 shown in FIG. 1 when the mobile data terminal 100 is waiting within the service area (at the PCH reception) and outside the service area. On the other hand, regarding the memory access clock signal, there is an application of the second means for maintaining the setting of the memory access clock signal for a busy condition of the mobile data terminal 100 to prevent a decrease in the memory access speed by the memory access clock control means 14 shown in FIG. 1.

In the conventional mobile data terminal, the frequency of the memory access clock signal depends on the CPU operation clock signal due to the circuit characteristics of the CPU operation clock control circuit. Therefore, if the setting of the CPU operation clock signal is changed to a low speed (low frequency), the setting of the memory access clock signal is thereby changed to a low speed (low frequency), too, as stated above. This causes a decrease in an access speed of the CPU to the programs or data recorded in the ROM/RAM. In this embodiment, the invention is characterized in that the memory access clock control means 14 maintains the frequency of the memory access clock signal at the level used before the setting change. Thereby, it becomes possible to achieve an effect of reducing the CPU power consumption of the mobile data terminal as described in detail below.

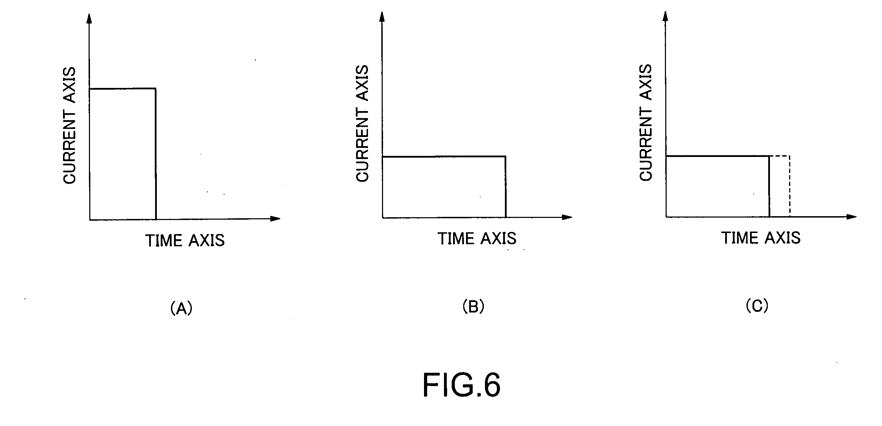

The following describes power consumption of the CPU 1 in the mobile data terminal 100 of this embodiment. Referring to FIGS. 6(A), (B), and (C), there are shown diagrams for explaining the power consumption of the CPU 1 in the mobile data terminal 100 of this embodiment.

FIG. 6(A) illustrates a diagram showing a consumed current flowing in the CPU 1 when the CPU 1 executes predetermined processing in the busy state of the mobile data terminal 100 of this embodiment. A vertical axis indicates an axis of the current flowing in the CPU 1 and a horizontal axis indicates a time axis.

FIG. 6(B) illustrates a diagram showing a consumed current flowing in the CPU when the CPU executes predetermined processing with the setting of the low-speed (low-frequency) CPU operation clock signal in the conventional mobile data terminal (See FIG. 7). A vertical axis indicates an axis of the current flowing in the CPU and a horizontal axis indicates a time axis.

FIG. 6(C) illustrates a diagram showing a consumed current flowing in the CPU 1 when the CPU 1 executes predetermined processing with the setting of the low-speed (low-frequency) CPU operation clock signal in the mobile data terminal 100 of this embodiment (See FIG. 3). A vertical axis indicates an axis of the current flowing in the CPU 1 and a horizontal axis indicates a time axis.

As shown in FIG. 6(A), while the mobile data terminal 100 of this embodiment is busy, the CPU 1 is supplied with the CPU clock <1> (high frequency) as already described with reference to FIG. 2, and therefore the consumed current is about twice as much as a case where the CPU 1 is supplied with the CPU clock <2> (low frequency) shown in FIG. 6(B).

In FIG. 6(B), a conventional mobile data terminal is used and provided with the CPU clock <2> having a low frequency, which is about a half of the frequency of the CPU clock <1>, and the current flowing in the CPU 1 is about a half of the current in FIG. 6(A).

On the other hand, in FIG. 6(B), the frequency of the CPU clock <2> is about a half of the frequency of the CPU clock <1> and therefore the time for the CPU 1 execution of the predetermined processing is about twice longer than in FIG. 6(A). Therefore, the power consumption necessary for the CPU 1 to execute the predetermined processing is independent of the frequency of the CPU operation clock signal. Thus, the power consumption in FIG. 6(A) is substantially the same as in FIG. 6(B).

On the other hand, as shown in FIG. 6(C), if the CPU 1 is supplied with the CPU clock <2> as already described with reference to FIG. 3 and the memory access clock <1> is set by using the memory access clock control means 14 shown in FIG. 1 in the mobile data terminal 100 of this embodiment, the memory access speed is higher than the case where the memory access clock <2> is supplied in FIG. 6(B) as already described with reference to FIG. 7 and therefore it is possible to reduce the time for the CPU 1 execution of the predetermined processing in comparison with the conventional one.

As indicated by a solid line in FIG. 6(C), the time for the CPU 1 execution of the predetermined processing is reduced in comparison with the case of using the conventional mobile data terminal 100 in FIG. 6(B) (an area enclosed by a dashed line in FIG. 6(C)). Therefore, according to this embodiment, the present invention achieves an effect of reducing the power consumption of the CPU 1.

Incidentally, as stated above, there is no effect of reducing the power consumption of the CPU 1 only with the first means (for setting the CPU clock signal having a lower frequency than the CPU clock signal in the busy state: See FIG. 3) in this embodiment. The first means (for changing the frequency of the CPU operation clock signal set by the CPU operation clock control circuit 6 shown in FIG. 1 to a low frequency), however, is necessary for applying the second means (for preventing a slowdown of the access speed to the ROM/RAM in such a way that the memory access clock signal is not changed in setting to a low speed (low frequency) (so as to achieve the same setting of the memory access clock signal as one for the busy condition of the mobile data terminal), simultaneously with the application of the first means).

In this embodiment, the ROM/RAM access' speed is maintained at a certain or higher speed to reduce the memory access time, thereby reducing processing time for predetermined processing executed by the CPU and thus achieving an effect of decreasing the CPU power consumption. Therefore, to realize the ROM/RAM access speed required for achieving an exemplary effect of this embodiment, the frequency of the memory access clock signal need to have a certain or higher frequency correspondingly. The frequency of the memory access clock signal and the frequency of the CPU operation clock signal, however, have a predetermined relation due to the circuit characteristics of the CPU operation clock control circuit 6 shown in FIG. 1. Thus, the frequency of a settable memory access clock signal is limited due to the relation with the frequency of the CPU operation clock signal.

Specifically, the frequency is too high if there is no change in the CPU clock <1> set for the busy condition of the mobile data terminal of this embodiment and thus it is hard to set the memory access clock signal having a desired frequency. Therefore, to enable the setting of the memory access clock signal (the memory access clock <1>) having the desired frequency (the second means), it is necessary to change the CPU clock <1> to the CPU clock <2> having the lower frequency than the CPU clock <1> (the first means).

Incidentally, if there is not so much required processing though the mobile data terminal is busy, the present invention is applicable so as to achieve the effect of reducing the power consumption on preferred embodiments are not limiting.

Further, the inventor's intent is to retain all equipments of the claimed invention even if the claims are amended later during prosecution.

## Claims

1. A mobile data terminal, comprising:
CPU operation clock signal for operating a CPU,
CPU clock control means for changing said CPU operation clock signal having been set in a busy state of the mobile data terminal to a low-speed CPU operation clock signal if the mobile data terminal is put in a wait state.

2. The mobile data terminal according to claim 1, further comprising memory access clock control means for controlling a memory access clock signal supplied to a memory controller, which is provided in the mobile data terminal and for use in regulating an external memory access speed and a CPU operation speed, so as to be maintained at a same setting as for a memory access clock signal set in the busy state of the mobile data terminal, as soon as the CPU clock control means changes the setting to the low-speed CPU operation clock signal.

3. A mobile data terminal, comprising:
CPU clock control means for changing a CPU operation clock signal having been set in a busy state of the mobile' data terminal to a low-speed CPU operation clock signal, if the mobile data terminal is put in a wait state or if there is not so much'required processing while the mobile data terminal is busy; and
memory access clock control means for controlling a memory access clock signal supplied to a memory controller, which is provided in the mobile data terminal and for use in regulating an external memory access speed and a CPU operation speed, so as to be maintained at a same setting as for a memory access clock signal set in the busy state of the mobile data terminal, as soon as the CPU clock control means changes the setting to the low-speed CPU operation clock signal.

4. A communication method for a mobile data terminal, comprising a CPU clock control step of changing a CPU operation clock signal having been set in a busy state of the mobile data terminal to a low-speed CPU operation clock signal if the mobile data terminal is put in a wait state within or outside a service area.

5. The communication method for the mobile data terminal according to claim 4, further comprising a memory access clock control step of controlling a memory access clock signal supplied to a memory controller, which is provided in the mobile data terminal and for use in regulating an external memory access speed and a CPU operation speed, so as to be maintained at a same setting as for a memory access clock signal set in the busy state of the mobile data terminal, simultaneously with the setting change to the low-speed CPU operation clock signal in the CPU clock control step.

6. A communication method for a mobile data terminal, comprising:
a CPU clock control for changing a CPU operation clock signal having been set in a busy state of the mobile data terminal to a low-speed CPU operation clock signal, if the mobile data terminal is put in a wait state within or outside a service area or if there is a predetermined amount or less of required processing while the mobile data terminal is busy; and
a memory access clock control for controlling a memory access clock signal supplied to a memory controller, which is provided in the mobile data terminal for regulating an external memory access speed and a CPU operation speed, so as to be maintained at a same setting as for a memory access clock signal set in the busy state of the mobile data terminal, simultaneously with the setting change to the low-speed CPU operation clock signal in the CPU clock control.

7. A mobile data terminal, comprising:
a central processing unit (CPU) operating on a CPU clock signal: and
a memory controller operating on a memory access clock signal,
wherein said CPU clock signal and said memory access clock signal are separately controlled.

8. The mobile data terminal of claim 7, wherein said CPU clock signal is changed from a high frequency in a busy state to a lower frequency if said mobile data terminal is placed in a state wherein processing can be slowed.

9. The mobile data terminal of claim 8, wherein said memory access clock signal is not reduced to a lower frequency when said CPU clock signal is changed from said high frequency to said lower frequency.

10. The mobile data terminal of claim 9, wherein:
said CPU clock signal is controlled by a CPU clock controller and said memory access clock signal is controlled by a memory access clock controller;
said CPU clock controller generates said lower frequency CPU clock signal by frequency-dividing said high frequency CPU clock signal; and
said memory access clock controller maintains said memory access clock signal frequency when said CPU clock signal is reduced in frequency by frequency-multiplying said CPU clock signal.

11. A method of reducing power consumption in a mobile data terminal, said method comprising:
controlling a clock signal to a central processing unit (CPU); and
separately controlling a memory access signal, such that a frequency of said memory access clock signal is maintained when a frequency of said CPU clock signal is reduced during a slower processing mode.
